Europäisches Patentamt

(19) European Patent Office

Office européen des brevets

(11) EP 0 739 922 B1

(12) FASCICULE DE BREVET EUROPEEN

(45) Date de publication et mention
de la délivrance du brevet:
**08.08.2001 Bulletin 2001/32**

(51) Int Cl.⁷: **C08G 63/58**, C08F 290/06,
C09D 167/07

(21) Numéro de dépôt: **96870055.9**

(22) Date de dépôt: **25.04.1996**

(54) **Compositions en poudre à base de polyesters cristallins contenant des groupes méthacrylyle terminaux**

Pulverzusammensetzungen aus Methacrylylendgruppen enthaltenden kristallinenen Polyestern

Powder compositions from crystalline polyesters containing methacrylyl endgroups

(84) Etats contractants désignés:
**AT BE CH DE DK ES FI FR GB GR IE IT LI LU MC NL PT SE**
Etats d'extension désignés:
**AL LT LV SI**

(30) Priorité: **26.04.1995 GB 9508458**

(43) Date de publication de la demande:
**30.10.1996 Bulletin 1996/44**

(73) Titulaire: **UCB, S.A.**
**1070 Bruxelles (BE)**

(72) Inventeurs:
• **Moens, Luc**
  **1640 Sint-Genesius-Rode (BE)**
• **Loutz, Jean-Marie**
  **1180 Bruxelles (BE)**
• **Maetens, Daniel**
  **1080 Bruxelles (BE)**
• **Loosen, Patrick**
  **2800 Mechelen (BE)**
• **Van Kerkhove, Marc**
  **1457 Nil-Saint-Vincent (BE)**

(56) Documents cités:
EP-A- 0 624 609          DE-A- 2 702 385
DE-A- 3 110 835          US-A- 3 485 732

**Description**

La présente invention se rapporte à de nouvelles compositions en poudre durcissables par rayonnement comprenant au moins un polyester cristallin contenant des groupes méthacrylyle terminaux et éventuellement un oligomère éthyléniquement insaturé, de même qu'à la préparation et aux utilisations desdites compositions.

Plus particulièrement, la présente invention concerne des compositions en poudre durcissables par irradiation ultraviolette ou par faisceaux d'électrons accélérés, dont le liant est constitué essentiellement par au moins un polyester cristallin contenant des groupes méthacrylyle terminaux et qui se prêtent à la production d'enduits de peinture et de vernis présentant un ensemble unique de propriétés, entre autres une excellente dureté, d'excellentes propriétés mécaniques et une remarquable résistance aux solvants.

Les compositions thermodurcissables en poudre sont bien connues dans l'état de la technique et sont largement utilisées comme peintures et vernis pour le revêtement d'objets les plus divers. Les avantages de ces poudres sont nombreux; d'une part les problèmes dus aux solvants sont complètement supprimés, d'autre part les poudres sont utilisées à 100%, dans la mesure où seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des accessoires de l'industrie automobile, du mobilier métallique, etc. Elles contiennent généralement des composés organiques thermodurcissables constituant le liant de la peinture, des charges, des pigments, des catalyseurs et des additifs divers pour adapter leur comportement à leur utilisation.

Il existe différents types de compositions thermodurcissables en poudre. Les compositions les plus connues contiennent comme liant, ou bien, un mélange de polyesters contenant des groupes carboxyle avec des composés époxydés, comme l'isocyanurate de triglycidyle ou des β-hydroxyalkylamides, ou encore, un mélange de polyesters contenant des groupes hydroxyle, avec des isocyanates bloqués ou non, des résines de mélamine ou de glycolurile, des anhydrides d'acides polycarboxyliques, etc.

Les polyesters contenant des groupes carboxyle ou des groupes hydroxyle utilisables pour la préparation de vernis et peintures en poudre ont déjà fait l'objet de nombreuses publications. Ces polyesters sont habituellement préparés à partir d'acides polycarboxyliques aromatiques, principalement l'acide téréphtalique et isophtalique et éventuellement une faible proportion d'acides dicarboxyliques aliphatiques ou cycloaliphatiques, et à partir de polyols aliphatiques divers comme par exemple l'éthylène glycol, le diéthylèneglycol, le néopentyl glycol, le 1,6-hexanediol, le triméthylolpropane, etc. Ces polyesters à base d'acides dicarboxyliques aromatiques, lorsqu'ils sont utilisés avec un agent de réticulation approprié, fournissent des compositions thermodurcissables donnant des enduits de peinture et de vernis possédant de bonnes propriétés, tant en ce qui concerne leur aspect qu'en ce qui concerne leurs propriétés mécaniques (résistance au choc, flexibilité).

A l'heure actuelle, la grande majorité des polyesters utilisés dans les compositions thermodurcissables en poudre sont des polyesters amorphes. Or, lorsque le polyester est amorphe, il est difficile de préparer des compositions thermodurcissables pulvérulentes parfaites, parce qu'elles doivent répondre à des critères souvent contradictoires. Ainsi, ces poudres ne peuvent pas se réagglomérer pendant leur manipulation, leur transport et leur stockage, ce qui implique que le polyester amorphe doit posséder une température de transition vitreuse (Tg) suffisamment élevée. D'un autre côté, pour que les particules de poudre puissent coalescer et former un enduit parfaitement homogène et uniforme, il faut que la température de transition vitreuse (Tg) du polyester soit suffisamment basse pour assurer une basse viscosité à l'état fondu qui, elle-même, assure un bon mouillage des pigments et autres matières solides accompagnant le polyester dans la formulation desdites compositions thermodurcissables en poudre.

De plus, la poudre doit être susceptible de fondre à la température de cuisson pour former un film régulier avant que ne commence la réaction de réticulation conduisant au durcissement final. Pour obtenir un bon étalement du film fondu sur la surface du substrat, il faut donc que la viscosité du polyester à l'état fondu soit suffisamment basse. En effet, une viscosité très élevée à l'état fondu empêche un bon étalement du film fondu et se traduit par une perte de la régularité et du brillant de l'enduit. Enfin, la vitesse de la réaction de réticulation de la composition ne peut être contrôlée qu'en faisant varier la quantité et/ou la nature de l'agent de réticulation et du catalyseur de réticulation éventuellement utilisé. Compte tenu de tous les impératifs qui précèdent, on admet généralement qu'un polyester amorphe convenable doit présenter une température de transition vitreuse (Tg) supérieure à 40°C mais inférieure à 85°C et une viscosité à l'état fondu comprise entre 100 et 10.000 mPa.s, mesurée à une température de 200°C, au viscosimètre cône/plateau selon la norme ASTM D 4287-88.

Pour toutes ces raisons on ne recommande généralement pas de réaliser des enduits à partir des compositions à base de tels polyesters amorphes par cuisson à des températures au-dessous de 160°C pendant une durée d'environ 10 à 20 minutes. En effet, à des températures de cuisson plus basses, on obtient généralement des revêtements de moindre qualité et ayant des propriétés physiques insuffisantes. De plus, la difficulté que l'on rencontre dans le réglage d'une température de transition vitreuse (Tg) suffisamment élevée pour supprimer la tendance à la réagglomération au cours du stockage constitue un manque de souplesse pour l'utilisateur de la poudre.

Pour résoudre ces problèmes, on a proposé plus récemment des compositions thermodurcissables en poudre dont le liant est constitué par un polyester cristallin contenant des groupes carboxyle ou des groupes hydroxyle. En effet, les propriétés des polyesters cristallins permettent d'obvier dans une large mesure aux inconvénients précédemment décrits qu'amènent le réglage de la température de transition vitreuse (Tg), de la viscosité à l'état fondu et de la réactivité des polyesters amorphes.

Les polyesters cristallins ont un point de fusion supérieur à 40 °C et, le cas échéant, une basse température de transition vitreuse (Tg). Cela a pour conséquence que la viscosité à l'état fondu des polyesters cristallins est très inférieure à celle des polyesters amorphes de poids moléculaire comparable couramment utilisés dans les compositions thermodurcissables en poudre. Ceci signifie que les compositions de revêtement en poudre à base de polyesters cristallins présentent une meilleure fluidité du film d'enduit à l'état fondu, ce qui donne des revêtements thermodurcis présentant un aspect amélioré.

En outre, grâce à la cristallinité des polyesters, les poudres formulées avec un agent de réticulation approprié présentent une très bonne stabilité à l'entreposage. De plus, ces polyesters cristallins autorisent la formation et la cuisson des enduits à des températures plus basses de l'ordre de 90 à 150°C (au lieu de 160 à 200°C). Enfin, comparés aux polyesters amorphes, les polyesters cristallins fournissent des enduits ayant de meilleures propriétés mécaniques, en particulier une excellente flexibilité.

Les compositions thermodurcissables à base de polyesters cristallins ont déjà fait l'objet d'un certain nombre de publications sous forme d'articles et de brevets. Dans la littérature des brevets, on citera notamment la demande de brevet international PCT WO 91/14745, la demande de brevet européen 70.118, les brevets américains 4.352.924, 4.387.214, 4.937.288 et 4.973.646.

Les polyesters cristallins et les compositions thermodurcissables en poudre préparés à partir de ceux-ci possèdent donc dans l'ensemble des propriétés plus avantageuses que les polyesters amorphes. Cependant, en dépit de leurs propriétés avantageuses, rares sont les polyesters cristallins qui ont pu trouver, en tant que seuls polymères, une application commerciale intéressante. Le plus souvent, ces polyesters cristallins sont utilisés comme supplément pour modifier les polyesters amorphes classiques disponibles dans le commerce.

La raison de cette situation est que les polyesters cristallins de l'état de la technique présentent aussi des inconvénients importants à l'échelle technique.

En premier lieu, les enduits obtenus à partir des polyesters cristallins connus présentent une faible dureté de surface (dureté au crayon HB). Ce défaut des polyesters cristallins limite fortement les applications techniques des compositions contenant ces polyesters.

En second lieu, pour qu'ils soient durcissables sous l'effet de la chaleur à basse température, les polyesters conventionnels requièrent la présence d'un agent de réticulation (composés époxydés, β-hydroxyalkylamides, etc.) et d'un catalyseur. Or, pour la préparation de la poudre, il faut fondre le polyester cristallin avec l'agent de réticulation, le catalyseur et les autres additifs dans une extrudeuse, à une température égale ou supérieure à la température de fusion du polyester cristallin. Il s'ensuit que, sans précautions particulières, il se produit déjà lors de la préparation de la poudre une réticulation prématurée indésirable du liant par réaction entre le polyester et l'agent de réticulation. Une poudre ainsi préparée produit des revêtements défectueux, à cause de la présence de particules gélifiées et parce que, au moment où le film fondu doit s'étaler sur la surface du substrat à revêtir, au lieu de diminuer sous l'effet de la chaleur, sa viscosité augmente trop rapidement pour obtenir un bon étalement, ce qui conduit à des malformations de l'enduit obtenu, telles que gel et peau d'orange.

En outre, la réticulation prématurée du liant peut, sans précautions particulières, causer le blocage de l'extrudeuse ce qui présente un danger réel non négligeable.

En troisième lieu, les compositions thermodurcissables en poudre préparées à partir des polyesters cristallins connus actuellement donnent des enduits dont la résistance aux intempéries laisse à désirer.

On a déjà tenté de mettre au point des liants pour la fabrication de vernis et peintures en poudre qui ne requièrent pas la présence d'un agent de réticulation; il s'agit de liants durcissables par irradiation ultraviolette ou par faisceaux d'électrons accélérés.

Le brevet américain 3.974.303 décrit de telles compositions renfermant comme liants, des résines thermoplastiques très diverses. Toutefois, le seul polyester décrit dans ce brevet (exemple 3) est un polyester amorphe qui possède une température de transition vitreuse inférieure à la température ambiante (2,5°C). Les compositions préparées au départ de ce polyester ne présentent dès lors pas la moindre stabilité au stockage et ne sont d'aucune utilité pratique.

Par voie de conséquence, il est très souhaitable de pouvoir disposer de nouveaux liants pour la fabrication de compositions en poudre qui peuvent être durcis par irradiation ultraviolette ou par faisceaux d'électrons accélérés et qui ne présentent plus les inconvénients rappelés plus haut. De tels liants devraient permettre de préparer des compositions en poudre durcissables à des températures peu élevées, présentant une bonne stabilité au stockage et assurant en même temps la production d'enduits de peinture ou de vernis possédant d'excellentes propriétés, en particulier en ce qui concerne la fluidité à l'état fondu, l'aspect de surface, la dureté superficielle, les propriétés mécaniques, la résistance aux solvants et la résistance aux intempéries.

On a maintenant fait la découverte surprenante que cet objectif est atteint lorsque, pour la préparation des compositions en poudre durcissables par rayonnement, on utilise comme liants des polyesters cristallins contenant des groupes méthacrylyle terminaux, préparés à partir de méthacrylate de glycidyle et de polyesters cristallins, eux-mêmes préparés à partir de constituants acide et alcoolique déterminés.

La présente invention a donc pour objet de nouvelles compositions en poudre durcissables par rayonnement comprenant au moins un polyester cristallin contenant des groupes méthacrylyle terminaux comprenant les produits de réaction du méthacrylate de glycidyle et d'un polyester cristallin contenant des groupes carboxyle terminaux, ledit polyester cristallin contenant des groupes carboxyle terminaux étant choisi parmi

(a) un polyester qui est le produit de réaction de

(1) un constituant acide qui contient (a.1.1) 85 à 100 moles % d'acide téréphtalique ou d'acide 1,4-cyclohexanedicarboxylique et (a.1.2) 0 à 15 moles % d'au moins un autre acide di- ou polycarboxylique aliphatique, cycloaliphatique ou aromatique ayant de 4 à 14 atomes de carbone; et
(2) un constituant alcoolique qui contient (a.2.1) 85 à 100 moles % d'un diol aliphatique saturé à chaîne droite ayant de 2 à 12 atomes de carbone et (a.2.2) 0 à 15 moles % d'au moins un autre di- ou polyol aliphatique ou cycloaliphatique ayant de 2 à 15 atomes de carbone; et

(b) un polyester qui est le produit de réaction de

(1) un constituant acide qui contient (b.1.1) 85 à 100 moles % d'un acide dicarboxylique aliphatique saturé à chaîne droite ayant de 4 à 14 atomes de carbone et (b.1.2) 0 à 15 moles % d'au moins un autre acide di- ou polycarboxylique aliphatique, cycloaliphatique ou aromatique ayant de 4 à 14 atomes de carbone, et,
(2) un constituant alcoolique qui contient (b.2.1) 85 à 100 moles % de 1,4-cyclohexanediol, de 1,4-cyclohexanediméthanol ou d'éthylène glycol et (b.2.2) 0 à 15 moles % d'au moins un autre di- ou polyol aliphatique ou cycloaliphatique ayant de 2 à 15 atomes de carbone,

et ledit polyester cristallin contenant des groupes méthacrylyle terminaux présentant un degré d'insaturation terminale de 0,18 à 1,8, de préférence, de 0,35 à 1,25 milliéquivalents de doubles liaisons par gramme de polyester, ainsi qu'une température de fusion supérieure à 40°C.

Les polyesters cristallins contenant des groupes méthacrylyle terminaux incorporés dans les compositions conformes à la présente invention présentent en outre les caractéristiques suivantes:

- un poids moléculaire moyen en nombre compris entre 1.000 et 21.000, de préférence entre 1.300 et 9.000, mesuré par chromatographie par perméation de gel (ou CPG),
- un point de fusion bien défini d'environ 60 à 150°C, déterminé par calorimétrie à balayage différentiel (ou DSC) selon la norme ASTM D 3418-82,
- une viscosité à l'état fondu inférieure à 10.000 mPa.s mesurée à 175°C au viscosimètre cône/plateau, (connue sous le nom de "viscosité ICI"), selon la norme ASTM D 4287-88.

Le constituant acide du polyester cristallin (a) contenant des groupes carboxyle terminaux contient de 85 à 100 moles % d'acide téréphtalique ou d'acide 1,4-cyclohexanedicarboxylique et éventuellement jusqu'à 15 moles % d'un ou plusieurs autres acides di- ou polycarboxyliques aliphatiques, cycloaliphatiques ou aromatiques ayant de 4 à 14 atomes de carbone, tels que l'acide maléique, l'acide fumarique, l'acide isophtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque et l'acide sébacique. Ces acides peuvent être utilisés sous forme de l'acide libre ou de leurs dérivés fonctionnels, en particulier sous la forme de l'anhydride. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange, mais de préférence, on les utilise seuls.

Le constituant alcoolique du polyester cristallin (a) contenant des groupes carboxyle terminaux contient de 85 à 100 moles % d'un diol aliphatique saturé à chaîne droite ayant de 2 à 12 atomes de carbone. Des exemples de diols qui peuvent être utilisés sont l'éthylène glycol, le 1,4-butanediol, le 1,5-pentanediol et le 1,6-hexanediol. Le constituant alcoolique du polyester cristallin (a) contenant des groupes carboxyle terminaux peut contenir également jusqu'à 15 moles % d'un ou plusieurs autres di- ou polyols aliphatiques ou cycloaliphatiques ayant de 2 à 15 atomes de carbone, comme par exemple le 1,4-cyclohexanediol, le 1,4-cyclohexanediméthanol ou le bisphénol A hydrogéné. Pour la préparation de polyesters ramifiés, on utilise avantageusement des polyols trihydroxylés ou tétrahydroxylés, tels que le triméthylolpropane, le ditriméthylolpropane, le triméthyloléthane ou le pentaérythritol et leurs mélanges.

Le constituant acide du polyester cristallin (b) contenant des groupes carboxyle terminaux contient de 85 à 100 moles % d'un acide dicarboxylique aliphatique saturé à chaîne droite ayant de 4 à 14 atomes de carbone. Des exemples des acides qui peuvent être utilisés sont l'acide succinique, l'acide glutarique, l'acide adipique, l'acide pimélique, l'acide subérique, l'acide azélaïque, l'acide sébacique, l'acide 1,12-dodécanedioïque, etc. Ces acides peuvent être utilisés sous forme d'acides libres ou de leurs dérivés fonctionnels, en particulier sous la forme d'anhydrides. En outre, ces acides peuvent être utilisés seuls ou en mélange, mais de préférence on les utilise seuls. Parmi ces acides, l'acide adipique est utilisé de préférence.

Le constituant acide du polyester cristallin (b) contenant des groupes carboxyle terminaux peut contenir également jusqu'à 15 moles % d'un ou plusieurs autres acides di- ou polycarboxyliques aliphatiques, cycloaliphatiques ou aromatiques ayant de 4 à 14 atomes de carbone, tels que l'acide maléique, l'acide fumarique, l'acide téréphtalique, l'acide isophtalique, l'acide 1,2-cyclohexanedicarboxylique, l'acide 1,3-cyclohexanedicarboxylique, l'acide 1,4-cyclohexanedicarboxylique. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange, mais de préférence, on les utilise seuls.

Le constituant alcoolique du polyester cristallin (b) contenant des groupes carboxyle terminaux contient de 85 à 100 moles % de 1,4-cyclohexanediol, de 1,4-cyclohexanediméthanol ou d'éthylène glycol. Le constituant alcoolique du polyester cristallin (b) contenant des groupes carboxyle terminaux peut contenir également jusqu'à 15 moles % d'un ou plusieurs autres di- ou polyols aliphatiques ou cycloaliphatiques tels que l'éthylène glycol, le propylène glycol, le 1,4-butanediol, le 1,5-pentanediol, le 1,6-hexanediol, le 1,4-cyclohexanediol, le 1,4-cyclohexanediméthanol et le bisphénol A hydrogéné. Pour la préparation de polyesters ramifiés, on utilise avantageusement des polyols trihydroxylés ou tétrahydroxylés, tels que le triméthylolpropane, le ditriméthylolpropane, le triméthyloléthane ou le pentaérythritol et leurs mélanges.

Une caractéristique essentielle des polyesters cristallins incorporés dans les compositions conformes à la présente invention est qu'ils sont constitués de chaînes qui contiennent, pratiquement toutes, des groupes méthacrylyle réticulables à chaque extrémité de la chaîne.

On a en effet constaté que les polyesters contenant des groupes méthacrylyle terminaux fournissent des compositions montrant, sous irradiation, une vitesse de durcissement plus grande que les polyesters contenant de l'insaturation apportée par des composés contenant des radicaux de l'acide maléique ou fumarique.

Par ailleurs, on a constaté également que la préparation de polyesters cristallins contenant des groupes acrylyle terminaux présente des difficultés liées à l'instabilité thermique du groupe acrylyle (risque de gélification prématurée) et qu'en outre, de tels polyesters présentent une réactivité trop élevée dans la polymérisation pour permettre une bonne application en tant que composition en poudre (voir exemple comparatif C3).

Une autre caractéristique essentielle des compositions selon la présente invention, réside dans le caractère cristallin des polyesters contenant des groupes méthacrylyle terminaux qui y sont incorporés.

Pour être utilisables dans des compositions en poudre, les polyesters cristallins doivent obligatoirement répondre aux exigences suivantes:

- il faut que les polyesters présentent un degré suffisamment élevé de cristallinité; et
- la durée de cristallisation doit être suffisamment courte.

Pour répondre à ces exigences, il faut que la chaîne du polyester soit aussi régulière que possible. Dans ce but, il est préférable que les constituants acide et alcoolique entrant dans la composition du polyester cristallin soient des composés symétriques à chaîne droite comme les diols aliphatiques saturés à chaîne droite et les acides dicarboxyliques saturés à chaîne droite et que ces composés soient utilisés seuls plutôt qu'en mélange.

On notera par ailleurs que la réaction avec le méthacrylate de glycidyle n'affecte pas le caractère cristallin du polyester obtenu.

Pour atteindre les buts poursuivis par la présente invention, il faut donc surtout opérer un choix judicieux de la nature des constituants acide et alcoolique entrant dans la composition des polyesters afin d'assurer le degré de cristallinité souhaité de ceux-ci.

Grâce à leur caractère cristallin, les polyesters contenant des groupes méthacrylyle terminaux que l'on incorpore dans les compositions en poudre conformes à l'invention possèdent tous les avantages des polyesters cristallins connus rappelés plus haut, à savoir un point de fusion supérieur à 40 °C et une viscosité à l'état fondu beaucoup plus basse que celle des polyesters amorphes de poids moléculaire comparable, d'où une meilleure fluidité du film d'enduit à l'état fondu.

En outre, grâce au caractère cristallin des polyesters, les poudres présentent une très bonne stabilité au stockage et l'on peut obtenir des enduits à des températures d'application peu élevées de l'ordre de 80 à 150°C. Il est évident aussi que l'abaissement de la température d'application est avantageuse économiquement et techniquement, puisqu'elle entraîne une économie d'énergie, d'une part, et une qualité plus sûre et plus constante des revêtements finals, d'autre part. Un autre avantage non négligeable est que l'on peut obtenir des revêtements sur des substrats plus sensibles à la chaleur tels que, par exemple, le bois et les matières plastiques, en élargissant ainsi le domaine d'application de ce type de produits.

Cependant, par rapport aux polyesters cristallins connus, qui ne contiennent pas de groupes méthacrylyle terminaux, les polyesters cristallins contenant des groupes méthacrylyle terminaux qui sont incorporés dans les compositions en poudre conformes à l'invention présentent aussi une série d'avantages supplémentaires très importants.

Ainsi que cela a déjà été expliqué dans l'introduction de la présente spécification, pour qu'ils puissent être durcis sous l'effet de la chaleur à basse température, les polyesters cristallins connus requièrent la présence d'un agent de réticulation et d'un catalyseur, avec comme conséquence la formation de revêtements défectueux (particules gélifiées et peau d'orange).

L'avantage primordial des compositions en poudre comprenant des polyesters cristallins conformément à l'invention par rapport aux compositions comprenant des polyesters conventionnels-est qu'elles peuvent être durcies à basse température, sans agent de réticulation supplémentaire ni catalyseur, par irradiation ultraviolette ou par faisceaux d'électrons accélérés.

Ceci permet d'obvier dans une large mesure aux inconvénients précédemment décrits qu'amène la présence d'un agent de réticulation et d'un catalyseur à la réticulation et au durcissement sous l'effet de la chaleur.

En effet, vu l'absence d'agent de réticulation, toute réaction prématurée avec celui-ci est exclue pendant la préparation de la poudre dans l'extrudeuse et surtout au moment où le film fondu doit s'étaler sur la surface du substrat à revêtir. On peut dès lors obtenir facilement la viscosité qui convient pour assurer un étalement parfait du film fondu, étant donné que la réticulation conduisant au durcissement du film fondu ne commence qu'au moment de l'exposition de celui-ci à des rayons ultraviolets ou à des faisceaux d'électrons accélérés. Ces avantages se traduisent dans les faits par l'obtention de revêtements bien tendus ayant un aspect lisse et sans défauts apparents.

Un autre avantage des compositions en poudre comprenant des polyesters cristallins conformes à l'invention, comme les exemples qui suivent le montreront, est qu'elles fournissent après durcissement par rayonnement des revêtements présentant une dureté de surface beaucoup plus élevée que les compositions en poudre contenant des polyesters cristallins connus durcies sous l'effet de la chaleur. Ce résultat est absolument surprenant.

Enfin, un défaut noté dans la plupart des compositions thermodurcissables en poudre préparées à partir des polyesters cristallins connus est que les enduits préparés ont une mauvaise résistance aux intempéries.

Conformément à la présente invention, en choisissant judicieusement la nature du constituant acide et du constituant alcoolique du polyester cristallin, il est possible d'obtenir des compositions en poudre donnant des enduits possédant une remarquable stabilité à la lumière et aux intempéries. Ceci est le cas par exemple pour les compositions en poudre préparées à partir des polyesters cristallins tout aliphatiques des exemples 3, 8, 9 et 11 donnés ci-après.

Les compositions en poudre durcissables par rayonnement conformes à l'invention et comprenant au moins un polyester cristallin contenant des groupes méthacrylyle terminaux contiennent 40 à 100 parties en poids de polyester cristallin contenant des groupes méthacrylyle terminaux pour 100 parties de la composition. En plus du polyester cristallin contenant des groupes méthacrylyle terminaux, ces compositions contiennent éventuellement un oligomère éthyléniquement insaturé, un photoinitiateur et les diverses substances auxiliaires utilisées conventionnellement dans la fabrication de peintures et vernis en poudre.

Pour préparer les polyesters cristallins contenant des groupes méthacrylyle terminaux, on prépare d'abord un polyester cristallin contenant des groupes carboxyle terminaux, à chaîne droite ou ramifiée, et on fait réagir ensuite le polyester contenant des groupes carboxyle terminaux ainsi préparé avec le méthacrylate de glycidyle.

Le polyester cristallin contenant des groupes carboxyle terminaux est préparé selon les méthodes conventionnelles de synthèse des polyesters par estérification en un ou plusieurs stades.

Si l'on procède en un stade pour l'obtention du polyester cristallin contenant des groupes carboxyle terminaux, on fait réagir ensemble un excès stoechiométrique d'un ou plusieurs acides di- ou polycarboxyliques et un ou plusieurs diols ou polyols appropriés.

Pour l'obtention d'un polyester cristallin contenant des groupes carboxyle terminaux en deux stades, on prépare d'abord un polyester cristallin contenant des groupes hydroxyle terminaux à partir d'un ou plusieurs acides di- ou polycarboxyliques et d'un excès stoechiométrique d'un ou plusieurs diols ou polyols appropriés et on estérifie ensuite le polyester cristallin contenant des groupes hydroxyle terminaux ainsi obtenu avec un ou plusieurs autres acides di- ou polycarboxyliques appropriés pour obtenir un polyester cristallin contenant des groupes carboxyle terminaux.

Pour la préparation des polyesters cristallins contenant des groupes carboxyle terminaux, on utilise en général un réacteur classique muni d'un agitateur, d'une entrée de gaz inerte (azote), d'une colonne de distillation reliée à un condenseur refroidi à l'eau et d'un thermomètre connecté à un thermorégulateur.

Les conditions d'estérification utilisées pour la préparation de ces polyesters cristallins sont classiques, à savoir que l'on peut utiliser un catalyseur d'estérification usuel dérivé de l'étain, tel que l'oxyde de dibutylétain, le dilaurate de dibutylétain, le trioctanoate de n-butylétain ou dérivé du titane, tel que le titanate de tétrabutyle, à raison de 0 à 1% en poids des réactifs, et ajouter éventuellement des antioxydants tels que les composés phénoliques IRGANOX 1010 (CIBA-GEIGY) ou IONOL CP (SHELL) ou des stabilisants de type phosphonite ou phosphite, tels que le phosphite de tributyle ou le phosphite de triphényle, à raison de 0 à 1% en poids des réactifs.

La polyestérification est généralement effectuée à une température que l'on augmente progressivement de 130°C à environ 180 à 250°C, d'abord sous pression normale, puis sous pression réduite à la fin de chaque stade du procédé, en maintenant ces conditions jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple, l'indice d'hydroxyle, l'indice d'acide, le poids moléculaire et/ou la viscosité.

Les polyesters cristallins contenant des groupes carboxyle ainsi obtenus présentent les caractéristiques suivantes :

- un indice d'acide de 10 à 150 mg de KOH/g, de préférence de 20 à 100 mg de KOH/g,
- un poids moléculaire moyen en nombre compris entre 800 et 20.000, de préférence entre 1.000 et 8.500,
- un point de fusion bien défini d'environ 60 à 150°C, déterminé par calorimétrie à balayage différentiel (ou DSC) selon la norme ASTM D 3418-82,
- une viscosité à l'état fondu inférieure à 10.000 mPa.s mesurée à 175°C au viscosimètre cône/plateau, (connue sous le nom de "viscosité ICI"), selon la norme ASTM D 4287-88, et
- une fonctionnalité qui est, de préférence, comprise entre 2 et 4.

Pour la préparation des polyesters cristallins contenant des groupes méthacrylyle, on procède de la manière suivante. Au terme de la polycondensation, on laisse refroidir le polyester, à l'état fondu, se trouvant dans le réacteur décrit plus haut, jusqu'à une température comprise entre 100 et 160°C, on y ajoute l'inhibiteur de polymérisation et ensuite lentement une quantité substantiellement équivalente de méthacrylate de glycidyle.

Les conditions opératoires utilisées pour la préparation des polyesters cristallins contenant des groupes méthacrylyle terminaux sont également classiques, à savoir que l'on peut utiliser un catalyseur de la réaction acide-époxy, comme des dérivés aminés, tels que la 2-phénylimidazoline, des phosphines, telles que la triphénylphosphine, des ammonium quaternaires, tels que le chlorure de tétrapropylammonium ou le bromure de tétrabutylammonium ou des sels de phosphonium, tels que le bromure d'éthyltriphénylphosphonium ou le chlorure de benzyltriphénylphosphonium, à raison de 0,01 à 1,0 % en poids des réactifs, et ajouter des inhibiteurs de polymérisation radicalaire, tels que la phénothiazine ou un inhibiteur de type hydroquinone, à raison de 0,01 à 1,0 % en poids des réactifs.

La réaction d'époxydation est généralement effectuée à une température comprise entre 100 et 160°C. Le degré d'avancement de la réaction d'époxydation est suivi par détermination des propriétés du polyester obtenu, par exemple, l'indice d'hydroxyle, l'indice d'acide, le degré d'insaturation terminale et/ou la teneur en méthacrylate de glycidyle libre.

Les polyesters cristallins contenant des groupes méthacrylyle terminaux décrits ci-dessus sont destinés à servir comme liants dans la préparation de compositions en poudre durcissables par irradiation ultraviolette ou par faisceaux d'électrons accélérés, lesdites compositions étant utilisables notamment comme vernis et peintures se prêtant à une application suivant la technique de dépôt au moyen d'un pistolet pulvérisateur électrostatique ou tribo-électrique ou suivant la technique de dépôt en lit fluidisé.

C'est pourquoi la présente invention se rapporte en outre à l'utilisation des compositions en poudre durcissables par rayonnement conformes à l'invention pour la préparation de vernis et peinture en poudre, ainsi qu'aux vernis et peinture en poudre obtenus à l'aide de ces compositions.

Enfin, la présente invention se rapporte également à un procédé de revêtement d'un article qui est caractérisé par l'application sur ledit article, d'une composition en poudre durcissable par rayonnement conforme à l'invention par dépôt par pulvérisation au pistolet électrostatique ou tribo-électrique ou par dépôt en lit fluidisé, suivie de la fusion du revêtement ainsi obtenu par chauffage à une température de 80 à 150°C pendant une durée d'environ 0,5 à 10 minutes et du durcissement du revêtement à l'état fondu par irradiation ultraviolette ou par faisceaux d'électrons accélérés.

Selon un mode de réalisation préféré de l'invention, les compositions en poudre durcissables par rayonnement comprennent en outre un oligomère éthyléniquement insaturé. A titre d'exemples de ces oligomères éthyléniquement insaturés, on citera le triacrylate et le triméthacrylate de l'isocyanurate de tris(2-hydroxyéthyle), les époxy acrylates et méthacrylates qui sont formés par réaction d'un composé époxy (par exemple, l'éther diglycidylique du bisphénol A) avec l'acide acrylique ou méthacrylique, les uréthannes acrylates et méthacrylates qui sont formés par réaction d'un di-ou polyisocyanate organique avec un acrylate d'hydroxyalkyle ou un méthacrylate d'hydroxyalkyle et éventuellement un alcool mono- et/ou polyhydroxylé (par exemple, le produit de réaction de l'acrylate ou du méthacrylate d'hydroxyéthyle avec le toluène-diisocyanate ou l'isophorone-diisocyanate), les acrylique acrylates ou méthacrylates comme par exemple, le produit de réaction de l'acide acrylique ou méthacrylique avec un copolymère contenant des groupes glycidyle obtenu par copolymérisation de monomères acryliques comme le méthacrylate de n-butyle et le méthacrylate de méthyle avec l'acrylate ou le méthacrylate de glycidyle, etc. Le triacrylate de l'isocyanurate de tris(2-hydroxyéthyle) est utilisé de préférence. Comme ces oligomères éthyléniquement insaturés contiennent des doubles liaisons polymérisables, ils participent également au durcissement par rayonnement et peuvent dès lors fournir des enduits dont la dureté de surface est encore accrue. Selon les applications envisagées, les compositions conformes à l'invention contiennent 0 à 20, de préférence 0 à 10 parties en poids d'oligomère éthyléniquement insaturé pour 100 parties de composition conforme à l'invention.

Pour le radiodurcissement des compositions en poudre conformes à l'invention avec des faisceaux d'électrons accélérés, il n'est pas nécessaire d'utiliser un photoinitiateur, vu que ce type de rayonnement assure à lui seul une production suffisamment importante de radicaux libres pour que le durcissement soit extrêmement rapide. Par contre, lorsqu'il s'agit de photodurcir les compositions en poudre conformes à l'invention avec un rayonnement dont les longueurs d'ondes sont comprises entre 200 et 600 nanomètres (rayonnement UV), la présence d'au moins un photoinitiateur est indispensable.

Les photoinitiateurs utilisables selon la présente invention sont choisis parmi ceux couramment utilisés à cet effet.

Les photoinitiateurs appropriés qui peuvent être utilisés sont les composés carbonylés aromatiques tels que la benzophénone et ses dérivés alkylés ou halogénes, l'anthraquinone et ses dérivés, la thioxanthone et ses dérivés, les éthers de la benzoïne, les diones-alpha aromatiques ou non-aromatiques, les dialkylacétals de benzile, les dérivés de l'acétophénone et les oxydes de phosphine.

Les photoinitiateurs pouvant convenir sont par exemple la 2,2'-diéthoxyacétophénone, la 2-, 3- ou 4-bromoacétophénone, la 2,3-pentanedione, l'hydroxycyclohexylphénylcétone, la benzaldéhyde, la benzoïne, la benzophénone, le 9,10-dibromoanthracène, la 2-hydroxy-2-méthyl-1-phénylpropane-1-one, la 4,4'-dichlorobenzophénone, la xanthone, la thioxanthone, le diméthylcétal de benzile, l'oxyde de diphényl(2,4,6-triméthylbenzoyl)-phosphine etc. Eventuellement, il peut être avantageux d'utiliser un photoactivateur tel que la tributylamine, le 2-(2-aminoéthylamino)éthanol, la cyclohexylamine, la diphénylamine, la tribenzylamine ou les aminoacrylates comme par exemple le produit d'addition d'une amine secondaire telle que la diméthylamine, la diéthylamine, la diéthanolamine, etc., avec un polyacrylate de polyol tel que le diacrylate de triméthylolpropane, de 1,6-hexenediol, etc.

Les compositions en poudre conformes à l'invention contiennent 0 à 15 et de préférence 0,5 à 8 parties en poids de photoinitiateurs pour 100 parties en poids de composition conforme à l'invention.

Les compositions en poudre durcissables par rayonnement conformes à l'invention peuvent également contenir diverses substances auxiliaires utilisées conventionnellement dans la fabrication de peintures et vernis en poudre.

Les substances auxiliaires ajoutées éventuellement aux compositions en poudre durcissables par rayonnement conformes à l'invention sont entre autres des composés absorbant les rayons ultraviolets comme le TINUVIN 900 (de CIBA-GEIGY Corp.), des stabilisants à la lumière à base d'amines à empêchement stérique (par exemple le TINUVIN 144 de CIBA-GEIGY Corp.), des agents régulateurs de fluidité comme le RESIFLOW PV5 (de WORLEE), le MODAFLOW (de MONSANTO), l'ACRONAL 4F (de BASF) ou le CRYLCOAT 109 (de UCB), des agents de dégazage tels que la benzoïne, etc.

Une variété de pigments et de charges minérales peut également être ajoutée aux compositions en poudre durcissables par rayonnement conformes à l'invention. A titre d'exemples de pigments et de charges on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc.

Ces substances auxiliaires sont utilisées en quantités usuelles, étant entendu que si les compositions durcissables par rayonnement conformes à l'invention sont utilisées comme vernis, on omettra l'addition de substances auxiliaires ayant des propriétés opacifiantes.

Pour la préparation des compositions en poudre durcissables par rayonnement, on mélange à sec le polyester cristallin contenant des groupes méthacrylyle terminaux, l'oligomère éthyléniquement insaturé, s'il est présent, éventuellement le photoinitiateur, et les diverses substances auxiliaires utilisées conventionnellement pour la fabrication de peintures et vernis en poudre, par exemple dans un mélangeur à tambour. On homogénéise ensuite ce mélange à une température située dans l'intervalle de 60 à 150°C dans une extrudeuse, par exemple une extrudeuse à vis unique Buss-Ko-Kneter ou une extrudeuse à double vis de type Werner-Pfleiderer, APV-BAKER ou PRISM. Ensuite, on laisse refroidir l'extrudat, on le broie cryogéniquement au moyen d'azote liquide et on le tamise pour obtenir une poudre dont la dimension des particules est comprise entre 10 et 150 micromètres.

Au lieu de la méthode ci-dessus, on peut également dissoudre le polyester cristallin contenant des groupes méthacrylyle terminaux, l'oligomère éthyléniquement insaturé, s'il est présent, éventuellement le photoinitiateur, et les diverses substances auxiliaires dans un solvant tel que le dichlorométhane, broyer pour obtenir une suspension homogène contenant environ 30% en poids de matières solides et évaporer ensuite le solvant par exemple par pulvérisation à sec ("spray drying") à une température d'environ 50°C, selon des méthodes connues en soi.

Les peintures et vernis en poudre ainsi obtenus conviennent parfaitement pour une application sur l'article à revêtir par les techniques traditionnelles, c'est-à-dire par la technique bien connue du dépôt en lit fluidisé ou par application au pistolet pulvérisateur électrostatique ou tribo-électrique.

Après avoir été appliqués sur l'article concerné, les revêtements déposés sont chauffés dans un four à circulation forcée ou au moyen de lampes infra-rouges à une température de 80 à 150°C pendant une durée d'environ 0,5 à 10 minutes en vue d'obtenir la fusion et l'étalement des particules de poudre en un revêtement lisse, uniforme et continu à la surface dudit article. Le revêtement fondu est ensuite durci par un rayonnement, comme la lumière ultraviolette émise, par exemple, par des radiateurs UV à vapeur de mercure à moyenne pression, d'au moins 80 à 150 W/cm linéaire, ou par n'importe quelle autre source bien connue de l'état de la technique, à une distance d'environ 5 à 20 cm et pendant une durée de 1 à 60 secondes.

Le revêtement fondu peut également être durci avec des faisceaux d'électrons accélérés d'au moins 150 KeV, la puissance des appareils employés étant directement fonction de l'épaisseur de la couche de composition à durcir par polymérisation.

Les compositions en poudre durcissables par rayonnement conformes à l'invention peuvent être appliquées sur les substrats les plus divers, comme par exemple le papier, le carton, le bois, les textiles, les métaux de différente nature, les matières plastiques comme les polycarbonates, les poly(méth)acrylates, les polyoléfines, les polystyrènes, les chlorures de polyvinyle, les polyesters, les polyuréthannes, les polyamides, les copolymères comme l'acrylonitrile-butadiène-styrène (ABS) ou l'acétate-butyrate de cellulose, etc.

Les exemples qui vont suivre illustrent l'invention sans la limiter. Sauf indication contraire, les parties citées dans les exemples sont des parties en poids.

Exemple 1.

Synthèse d'un polyester cristallin contenant des groupes méthacrylyle terminaux en trois stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 358,4 parties de 1,6-hexanediol, 10,4 parties de triméthylolpropane et 1,9 parties de trioctanoate de n-butylétain comme catalyseur. On chauffe le mélange en atmosphère d'azote et sous agitation jusqu'à une température d'environ 140°C, puis on ajoute, toujours sous agitation, 484,4 parties d'acide téréphtalique et on chauffe le mélange jusqu'à une température de 190°C à laquelle l'eau formée commence à distiller. Puis on poursuit le chauffage graduellement jusqu'à ce que la masse atteigne la température de 230°C. Après que l'on ait recueilli environ 95% de la quantité théorique d'eau formée, on obtient un polyester transparent.

Le polyester cristallin contenant des groupes hydroxyle terminaux ainsi obtenu présente les caractéristiques suivantes:

| | |
|---|---|
| indice d'acide | 9,5 mg de KOH/g |
| indice d'hydroxyle | 42 mg de KOH/g |
| viscosité ICI à 175°C | 700 mPa.s |

2e stade.

On laisse refroidir le polyester contenant des groupes hydroxyle terminaux obtenu au premier stade jusqu'à 200°C et on y ajoute 75 parties d'acide isophtalique. On chauffe ensuite graduellement le mélange réactionnel jusqu'à la température de 230°C. On laisse le mélange réactionnel à cette température pendant environ deux heures, jusqu'à ce que le mélange réactionnel devienne transparent, puis on diminue progressivement la pression jusqu'à 50 mm Hg. On poursuit encore la réaction pendant 3 heures à 230°C sous pression réduite.

Le polyester cristallin contenant des groupes carboxyle terminaux ainsi obtenu présente les caractéristiques suivantes:

| | |
|---|---|
| indice d'acide | 31 mg de KOH/g |

(suite)

| indice d'hydroxyle | 1 mg de KOH/g |
|---|---|
| viscosité ICI à 175°C | 7.450 mPa.s |
| $\overline{M}$n (poids moléculaire moyen en nombre; CPG) | 4.550 |

3e stade.

On laisse refroidir le polyester contenant des groupes carboxyle terminaux obtenu au deuxième stade jusqu'à 150°C et on y ajoute 0,4 partie de di-tert.-butylhydroquinone comme inhibiteur de polymérisation et 4,1 parties de bromure d'éthyltriphénylphosphonium comme catalyseur. On y ajoute ensuite lentement en atmosphère d'oxygène et sous agitation 62,2 parties de méthacrylate de glycidyle. Une heure après que l'addition soit terminée, on obtient un polyester cristallin contenant des groupes méthacrylyle terminaux qui présente les caractéristiques suivantes:

| indice d'acide | 1,5 mg de KOH/g |
|---|---|
| indice d'hydroxyle | 32 mg de KOH/g |
| teneur en insaturation | 0,5 milliéquivalent dl/g |
| teneur en méthacrylate de glycidyle libre | < 0,1 % en poids |
| viscosité ICI à 175°C | 5.300 mPa.s |
| température de fusion (déterminée par calorimétrie à balayage différentiel (ou DSC) avec une vitesse de chauffage de 20°C par minute) | 101°C |
| $\overline{M}$n (CPG) | 4.890 |

Exemple 2.

Synthèse d'un polyester cristallin contenant des groupes méthacrylyle terminaux en deux stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 502,3 parties de 1,4-cyclohexanediméthanol, 545,0 parties d'acide adipique et 4,5 parties d'oxyde de dibutylétain comme catalyseur. On chauffe le mélange en atmosphère d'azote et sous agitation jusqu'à une température d'environ 140°C à laquelle l'eau formée commence à distiller. Puis on poursuit le chauffage graduellement jusqu'à ce que la masse atteigne la température de 220°C. Lorsque la distillation sous la pression atmosphérique s'arrête, on établit progressivement un vide de 50 mm Hg. On poursuit encore la réaction pendant 3 heures à 220°C sous une pression de 50 mm Hg.
Le polyester cristallin contenant des groupes carboxyle terminaux ainsi obtenu présente les caractéristiques suivantes:

| indice d'acide | 30,5 mg de KOH/g |
|---|---|
| indice d'hydroxyle | 2 mg de KOH/g |
| viscosité ICI à 175°C | 3.500 mPa.s |
| $\overline{M}$n | 3.740 |

2e stade.

On suit le mode opératoire décrit au troisième stade de l'exemple 1, mais on laisse refroidir préalablement le polyester contenant des groupes carboxyle terminaux obtenu au premier stade jusqu'à la température de 140°C, on remplace le bromure d'éthyltriphénylphosphonium par le chlorure de benzyltriphénylphosphonium et on utilise 70 parties de méthacrylate de glycidyle.
On obtient un polyester cristallin contenant des groupes méthacrylyle terminaux qui présente les caractéristiques suivantes:

| indice d'acide | 1,7 mg de KOH/g |
|---|---|
| indice d'hydroxyle | 31 mg de KOH/g |

(suite)

| | |
|---|---|
| teneur en insaturation | 0,5 milliéquivalent dl/g |
| teneur en méthacrylate de glycidyle libre | < 0,1 % en poids |
| viscosité ICI à 175°C | 3.600 mPa.s |
| temperature de fusion (DSC; 20°C/min) | 80°C |
| $\overline{M}$n (CPG) | 4.025 |

Exemple 3.

Synthèse d'un polyester cristallin contenant des groupes méthacrylyle terminaux en deux stades.

1er stade.

On suit le mode opératoire décrit au premier stade de l'exemple 2, mais on remplace les matières de départ par 425,3 parties de 1,4-cyclohexanediol, 47,3 parties de bisphénol A hydrogéné, 23,6 parties de triméthylolpropane, 641 parties d'acide adipique, et on utilise 1,7 partie de trioctanoate de n-butylétain comme catalyseur et 0,5 partie de tributylphosphite comme stabilisant.

Le polyester cristallin contenant des groupes carboxyle terminaux ainsi obtenu présente les caractéristiques suivantes:

| | |
|---|---|
| indice d'acide | 34 mg de KOH/g |
| indice d'hydroxyle | 2 mg de KOH/g |
| viscosité ICI à 175°C | 4.500 mPa.s |
| $\overline{M}$n | 5.610 |

2e stade.

On suit le mode opératoire décrit au troisième stade de l'exemple 1, mais on utilise 75,0 parties de méthacrylate de glycidyle, 5,0 parties de bromure n-butyltriphénylphosphonium comme catalyseur et 0,3 partie de phénothiazine comme inhibiteur de polymérisation.

On obtient un polyester cristallin contenant des groupes méthacrylyle terminaux qui présence les caractéristiques suivantes:

| | |
|---|---|
| indice d'acide | 1 mg de KOH/g |
| indice d'hydroxyle | 33 mg de KOH/g |
| teneur en insaturation | 0,5 milliéquivalent dl/g |
| teneur en méthacrylate de glycidyle libre | < 0,1 % en poids |
| viscosité ICI à 175°C | 4.000 mPa.s |
| température de fusion (DSC; 20°C/min) | 130°C |
| $\overline{M}$n (CPG) | 6.040 |

Exemples 4 à 11.

On a encore préparé 8 autres polyesters cristallins contenant des groupes méthacrylyle terminaux conformes à l'invention en suivant le mode opératoire de l'exemple 1 (exemples 4 à 6) ou de l'exemple 2 (exemples 7 à 11). Il est à noter toutefois qu'à l'exemple 11, on ajoute 0,9 partie de phosphite de tributyle comme stabilisant. Le tableau I ci-dessous indique la nature et la quantité (parties en poids) des matières de départ utilisées, les quantités (parties en poids) des catalyseurs d'estérification (trioctanoate de n-butylétain) et d'époxydation (bromure d'éthyltriphénylphosphonium), les quantités (parties en poids) d'inhibiteur de polymérisation radicalaire (di-tert.-butyl-hydroquinone), ainsi que l'indice d'acide ($I_{Ac}$ en mg de KOH/g), l'indice d'hydroxyle ($I_{OH}$ en mg de KOH/g), la viscosité ICI (en mPa.s) mesurée à la température indiquée entre parenthèses, et le poids moléculaire moyen en nombre ($\overline{M}$n) déterminé par chromatographie par perméation de gel (CPG) des polyesters cristallins obtenus après chaque stade, de même que la teneur en insaturation exprimée en milliéquivalents de double liaisons par g (en abrégé meq dl/g), la teneur en méthacrylate de glycidyle libre (MAG libre en % en poids), la viscosité ICI (en mPa.s) mesurée à la température indiquée entre parenthèses, la température de fusion (Tm en °C, déterminée par calorimétrie à balayage différentiel ou DSC, 20°C/min) et le poids moléculaire moyen en nombre ($\overline{M}$n) déterminé par CPG du polyester cristallin contenant des groupes méthacrylyle terminaux obtenu.

Dans le tableau I, les différents composés utilisés pour la préparation des polyesters cristallins selon l'invention, sont désignés par les abréviations suivantes :

| | |
|---|---|
| ATP | acide téréphtalique |
| AAd | acide adipique |
| CHDA | acide 1,4-cyclohexanedicarboxylique |
| HD | 1,6-hexanediol |
| BD | 1,4-butanediol |
| CHDO | 1,4-cyclohexanediol |
| CHDM | 1,4-cyclohexanediméthanol |
| TMP | triméthylolpropane |
| EG | éthylène glycol |
| DDA | acide 1,12-dodécanedioïque |
| AIP | acide isophtalique |
| MAG | méthacrylate de glycidyle |
| CatEst | catalyseur d'estérification (trioctanoate de n-butylétain) |
| CatEp | catalyseur d'époxydation (bromure d'éthyltriphénylphosphonium) |
| Inhib | inhibiteur de polymérisation radicalaire (di-tert.-butyl-hydroquinone) |

TABLEAU I

| Exemples de polyesters cristallins contenant des groupes méthacrylyle terminaux | | | | | | | | |
|---|---|---|---|---|---|---|---|---|
| Constituants (parties) | 4 | 5 | 6 | 7 | 8 | 9 | 10 | 11 |
| Premier stade | | | | | | | | |
| ATP | 402,3 | 407,9 | 563,4 | | | | | |
| AAd | | | | | 612,3 | 608,0 | 530,3 | |
| CHDA | | | | 711,6 | | | | |
| HD | 345,3 | 311,3 | 429,9 | | | | | |
| BD | | | | 328,0 | | | | |
| CHDO | | | | | 429,5 | 455 | | |
| CHDM | | | | | | | 466,7 | |
| TMP | | 28,7 | | 22 | 22 | | | |
| EG | | | | | | | | 192,1 |
| DDA | | | | | − | | | 803,3 |
| CatEst | 2 | 1,6 | 1,9 | 2,3 | 2,3 | 2,3 | 2,2 | 2,2 |
| $I_{Ac}$ (mg de KOH/g) | 5 | 3 | 5 | 29 | 32 | 35 | 54 | 56 |
| $I_{OH}$ (mg de KOH/g) | 85 | 87 | 124 | 1 | 5,5 | 2 | 2 | 2 |
| Visc. ICI | (150°C) | (150°C) | (150°C) | (125°C) | (150°C) | (175°C) | (125°C) | (100°C) |
| (mPa.s) | 400 | 850 | 150 | 7400 | 9100 | 1200 | 1000 | 300 |
| Mn (CPG) | 1320 | 1679 | 935 | 5610 | 5610 | 3740 | 2244 | 1930 |
| Deuxième stade (exemples 4 à 6) | | | | | | | | |
| AIP | 141,1 | 140,9 | | | | | | |
| AAd | | | 160 | | | | | |
| $I_{Ac}$ (mg de KOH/g) | 51 | 50 | 32 | | | | | |
| $I_{OH}$ (mg de KOH/g) | 3 | 0 | 2 | | | | | |
| Visc. ICI | (175°C) | (175°C) | (150°C) | | | | | |
| (mPa.s) | 2100 | 7250 | 2350 | | | | | |
| $\overline{M}$n (CPG) | 2244 | 3237 | 3740 | | | | | |

TABLEAU I   (suite)

| Exemples de polyesters cristallins contenant des groupes méthacrylyle terminaux | | | | | | | | |
|---|---|---|---|---|---|---|---|---|
| Constituants (parties) | 4 | 5 | 6 | 7 | 8 | 9 | 10 | 11 |
| Troisième stade (exemples 4 à 6) ou deuxième stade (exemples 7 à 11) | | | | | | | | |
| CatEp | 3,9 | 3,4 | 4,6 | 4,6 | 4,6 | 4,6 | 4,4 | 5,6 |
| Inhib | 0,6 | 0,6 | 0,4 | 0,4 | 0,4 | 0,4 | 0,7 | 0,7 |
| MAG | 99,4 | 101,2 | 70,0 | 70,0 | 70,0 | 70,0 | 111,5 | 112,0 |
| $I_{Ac}$ (mg de KOH/g) | 1,6 | 2,1 | 7 | 3 | 2 | 1 | 1,4 | 1 |
| $I_{OH}$ (mg de KOH/g) | 52 | 50 | 30 | 28 | 30 | 32 | 45 | 54 |
| meq dl/g | 0,8 | 0,8 | 0,5 | 0,5 | 0,5 | 0,5 | 0,8 | 0,8 |
| MAG libre (%) | < 0,1 | < 0,1 | < 0,1 | < 0,1 | < 0,1 | < 0,1 | < 0,1 | < 0,1 |
| Visc. ICI | (125°C) | (175°C) | (150°C) | (125°C) | (150°C) | (150°C) | (125°C) | (100°C) |
| (mPa.s) | 3400 | 4600 | 2450 | 3800 | 3600 | 4800 | 1300 | 200 |
| Tm (°C) | 83 | 80 | 100 | 88 | 108 | 125 | 72 | 75 |
| $\overline{M}$n (CPG) | 2530 | 3650 | 4020 | 6040 | 6036 | 4024 | 2528 | 2220 |

Exemple 12.

Synthèse d'un polyester cristallin contenant des groupes méthacrylyle terminaux en trois stades.

1er stade.

On suit le mode opératoire décrit au premier stade de l'exemple 1, mais on remplace les matières de départ par 453,7 parties de 1,6-hexanediol et 590,4 parties d'acide téréphtalique et on utilise 2,6 parties de trioctanoate de n-butylétain comme catalyseur.

Le polyester contenant des groupes hydroxyle terminaux ainsi obtenu présente les caractéristiques suivantes:

| indice d'acide | 9 mg de KOH/g |
|---|---|
| indice d'hydroxyle | 44 mg de KOH/g |
| viscosité ICI à 175°C | 1.000 mPa.s |

2e stade.

On suit le mode opératoire décrit au deuxième stade de l'exemple 1, mais on utilise 91,8 parties d'acide isophtalique.

Le polyester cristallin contenant des groupes carboxyle terminaux ainsi obtenu présente les caractéristiques suivantes:

| indice d'acide | 30 mg de KOH/g |
|---|---|
| indice d'hydroxyle | 1 mg de KOH/g |
| viscosité ICI à 175°C | 4.000 mPa.s |
| température de fusion (DSC; 20°C/min) | 130°C |
| $\overline{M}$n (CPG) | 3.740 |

3e stade.

On suit le mode opératoire décrit au troisième stade de l'exemple 1, mais on utilise 65 parties de méthacrylate de glycidyle , 5 parties de bromure d'éthyltriphénylphosphonium comme catalyseur et 0,6 partie de di-tert.-butylhydroquinone comme inhibiteur de polymérisation.

On obtient un polyester cristallin contenant des groupes méthacrylyle terminaux qui présente les caractéristiques suivantes:

| indice d'acide | 1,3 mg de KOH/g |
| --- | --- |
| indice d'hydroxyle | 30 mg de KOH/g |
| teneur en insaturation | 0,5 milliéquivalent dl/g |
| teneur en méthacrylate de glycidyle libre | < 0,1 % en poids |
| viscosité ICI à 175°C | 3.300 mPa.s |
| température de fusion (DSC; 20°C/min) | 122°C |
| $\overline{M}$n (CPG) | 4.050 |

On a préparé également deux polyesters cristallins contenant des groupes carboxyle terminaux (C1 et C2), de même qu'un polyester cristallin contenant des groupes acrylyle terminaux (C3), qui sont introduits à titre comparatif.

Exemple C1. (comparatif)

Synthèse d'un polyester cristallin contenant des groupes carboxyle terminaux en deux stades.

On suit le mode opératoire décrit à l'exemple 12, mais on s'arrête après l'obtention du polyester cristallin contenant des groupes carboxyle terminaux obtenu au deuxième stade et on ajoute au produit obtenu encore 5 parties de bromure d'éthyltriphénylphosphonium comme catalyseur de réticulation.

Exemple C2. (comparatif)

Synthèse d'un polyester cristallin contenant des groupes carboxyle terminaux en un stade.

Selon le mode opératoire décrit au premier stade de l'exemple 2, on fait réagir 777,4 parties d'acide 1,4-cyclohexanedicarboxylique, 366,8 parties de 1,4-butanediol et 2,5 parties de trioctanoate de n-butylétain comme catalyseur.
Le polyester cristallin contenant des groupes carboxyle terminaux ainsi obtenu présente les caractéristiques suivantes:

| indice d'acide | 53 mg de KOH/g |
| --- | --- |
| indice d'hydroxyle | 3 mg de KOH/g |
| viscosité ICI à 175°C | 2.500 mPa.s |
| température de fusion (DSC; 20°C/min) | 70°C |
| $\overline{M}$n (CPG) | 2.240 |

On ajoute à ce polyester également 5,5 parties de bromure d'éthyltriphénylphosphonium comme catalyseur de réticulation.

Exemple C3. (comparatif)

Synthèse d'un polyester cristallin contenant des groupes acrylyle terminaux en trois stades.

On suit le mode opératoire décrit à l'exemple 1, mais au troisième stade, on remplace les 62,2 parties de méthacrylate de glycidyle par 56,0 parties d'acrylate de glycidyle.
On obtient un polyester cristallin contenant des groupes acrylyle terminaux qui présente les caractéristiques suivantes:

| indice d'acide | 1,0 mg de KOH/g |
| --- | --- |
| indice d'hydroxyle | 32 mg de KOH/g |
| teneur en insaturation | 0,5 milliéquivalent dl/g |
| teneur en acrylate de glycidyle libre | < 0,1 % en poids |
| viscosité ICI à 175°C | 16.000 mPa.s |
| température de fusion (DSC; 20°C/min) | 110°C |
| $\overline{M}$n (CPG) | 5.120 |

Exemple 13.

Préparation de compositions de revêtement en poudre durcissable par rayonnement.

A partir des polyesters cristallins contenant des groupes méthacrylyle terminaux conformes à l'invention obtenus aux exemples 1 à 12 et du polyester cristallin contenant des groupes acrylyle terminaux, non conforme à l'invention, obtenu à l'exemple C3, on prépare une série de poudres utilisables pour la fabrication de revêtements par projection à l'aide d'un pistolet pulvérisateur électrostatique, dont la formulation est la suivante:

| A) Formulation à base des polyesters des exemples 1, 3, 5, 7, 11, 12 et C3: | |
| --- | --- |
| Polyester | 94,50 parties |
| Diméthylcétal de benzile(1) | 4,90 parties |
| Agent régulateur de fluidité(5) | 0,25 partie |
| Benzoïne | 0,35 partie |
| B) Formulation à base des polyesters des exemples 2, 8 et 12: | |
| Polyester | 90,70 parties |
| Triacrylate de l'isocyanurate de tris(2-hydroxyéthyle) (3) | 3,80 parties |
| Diméthylcétal de benzile (1) | 4,90 parties |
| Agent régulateur de fluidité (5) | 0,25 partie |
| Benzoïne | 0,35 partie |
| C) Formulation à base des polyesters des exemples 4, 10 et 12: | |
| Polyester | 88,8 parties |
| Triacrylate de l'isocyanurate de tris(2-hydroxyéthyle) (3) | 5,70 parties |
| Diméthylcétal de benzile (1) | 4,90 parties |
| Agent régulateur de fluidité(5) | 0,25 partie |
| Benzoïne | 0,35 partie |
| D) Formulation à base des polyesters des exemples 6 et 9: | |
| Polyester | 72,6 parties |
| Triacrylate de l'isocyanurate de tris(2-hydroxyéthyle) (3) | 3,1 parties |
| Diméthylcétal de benzile(1) | 2,0 parties |
| Oxyde de diphényl(2,4,6-triméthylbenzoyl)phosphine (2) | 1,0 partie |
| Dioxyde de titane(4) | 20,0 parties |
| Agent régulateur de fluidité(6) | 1,0 partie |
| Benzoïne | 0,3 partie |
| E) Formulation à base du polyester de l'exemple 2: | |
| Polyester | 99,40 parties |
| Agent régulateur de fluidité (5) | 0,25 partie |
| Benzoïne | 0,35 partie |

(1) IRGACURE 651 (CIBA-GEIGY)
(2) LUCIRIN TPO (BASF)
(3) IRR 264 (UCB)
(4) KRONOS CL 2310 (CIBA-GEIGY)
(5) MODAFLOW 2000 (MONSANTO)
(6) RESIFLOW PV5 (WORLEE CHEMIE)

A titre comparatif, on prépare encore trois poudres utilisables pour la fabrication de revêtements par projection à l'aide d'un pistolet pulvérisateur électrostatique, dont la formulation est la suivante:

| F) Formulation à base du polyester cristallin de l'exemple C1: | |
| --- | --- |
| Polyester | 93,0 parties |

**15**

(suite)

| F) | Formulation à base du polyester cristallin de l'exemple C1: | |
|---|---|---|
| | Isocyanurate de triglycidyle (7) | 7,00 parties |
| | Agent régulateur de fluidité(8) | 2,50 parties |
| | Benzoïne | 0,35 partie |
| G) | Formulation à base du polyester cristallin de l'exemple C1: | |
| | Polyester | 55,1 parties |
| | Isocyanurate de triglycidyle (7) | 4,1 parties |
| | Dioxyde de titane (4) | 39,5 parties |
| | Agent régulateur de fluidité(6) | 1,0 partie |
| | Benzoïne | 0,3 partie |
| H) | Formulation à base du polyester cristallin de l'exemple C2: | |
| | Polyester | 89,5 parties |
| | Isocyanurate de triglycidyle(7) | 9,9 parties |
| | Agent régulateur de fluidité(5) | 0,3 partie |
| | Benzoïne | 0,3 partie |

(4) KRONOS CL 2310 (CIBA-GEIGY)
(5) MODAFLOW 2000 (MONSANTO)
(6) RESIFLOW PV5 (WORLEE CHEMIE)
(7) ARALDITE PT810 (CIBA-GEIGY)
(8) CRYLCOAT 109 (UCB)

On prépare ces compositions en poudre en mélangeant à sec le polyester cristallin, le cas échéant, le photoinitiateur, l'oligomère éthyléniquement insaturé, s'il est présent (ou l'isocyanurate de triglycidyle dans le cas des compositions données à titre comparatif) avec les diverses substances auxiliaires utilisées conventionnellement pour la fabrication des peintures et vernis en poudre. Le mélange obtenu est homogénéisé à une température d'environ 70 à 140 °C dans une extrudeuse à double vis APV (de la société APVBAKER) et l'extrudat est broyé cryogéniquement dans un broyeur de type ALPINE 100UPZ (de la société ALPINE) équipé d'une entrée d'azote liquide de sorte que la température du broyage est maintenue à -80°C. Pour terminer, la poudre est tamisée pour obtenir une dimension des particules comprise entre 10 et 110 micromètres.

Exemple 14.

Caractéristiques des enduits.

On applique les poudres formulées comme décrit à l'exemple 13 avec les polyesters conformes à l'invention et avec ceux donnés à titre comparatif, au pistolet pulvérisateur électrostatique sous une tension de 70 kV sur des panneaux en acier laminés à froid, non traités, en une épaisseur de film de 20 à 60 micromètres. Les enduits déposés subissent ensuite une fusion (une cuisson pour les poudres des exemples comparatifs C1 et C2) dans un four ventilé avec de l'air, à la température indiquée dans le tableau II, pendant une durée d'environ 5 minutes (15 minutes pour les poudres des exemples comparatifs C1 et C2). Ensuite, on soumet les enduits à l'état fondu obtenus avec les poudres conformes à l'invention, et avec la poudre de l'exemple comparatif (C3), soit à une irradiation à la lumière ultraviolette émise par des lampes UV à vapeur de mercure à moyenne pression (DQ1023 de la société HERAEUS INSTRUMENTS GmbH) de 100 W/cm, à une distance de 8 cm et pendant une durée de 5 à 10 ou 20 secondes, selon que l'enduit est destiné à fournir un vernis transparent (formulations A à C, F et H) ou une peinture (formulations D et G), soit sous atmosphère d'azote, à un faisceau d'électrons accéléré produit par une cathode linéaire de 170 KeV (de la société ENERGY SCIENCES Inc.) à une dose de 4 Mrads (formulation E).

On soumet les revêtements durcis ainsi obtenus aux tests classiques. Les résultats obtenus sont reportés dans le tableau II, dans lequel

la première colonne donne le numéro de l'exemple de préparation du polyester utilisé dans la formulation testée,

la deuxième colonne, le type de formulation utilisé,

la troisième colonne, la température de cuisson en °C (température réelle de l'objet à revêtir),

la quatrième colonne, la valeur de la dureté au crayon sous un angle de 45°, avec une force de 7,5 newtons, mesurée selon la norme ASTM D3363-92A,

la cinquième colonne, la valeur de la résistance au choc direct, en kg.cm, selon la norme ASTM D2795,

la sixième colonne, la valeur de la résistance au choc inverse, en kg.cm, selon la norme ASTM D2795,

la septième colonne, la valeur obtenue dans l'essai d'emboutissement Erichsen, selon la norme ISO 1520,

la huitième colonne, une évaluation visuelle de l'enduit, selon laquelle, bon signifie que le revêtement durci possède un aspect lisse et brillant, sans défauts apparents tels que cratères, piqûres, etc., moyen signifie que le revêtement durci présente une légère peau d'orange avec une brillance mesurée sous un angle de 60° qui est inférieure à 90% et mauvais signifie que le revêtement durci présence un aspect de peau d'orange, une brillance mesurée sous un angle de 60° qui est inférieure à 80% et en outre des défauts apparents et

la neuvième colonne, la résistance à la méthyléthylcétone, qui correspond au nombre de doubles frottements (aller et retour) avec un tampon d'ouate imbibé de méthyléthylcétone, qui n'altère pas l'aspect de la surface du film durci.

TABLEAU II

Caractéristiques des enduits.

| Polyester de l'exemple | Formulation | Température de cuisson (°C) | Dureté au crayon | Choc direct (kg.cm) | Choc inverse (kg.cm) | Emboutissage Erichsen (mm) | Evaluation visuelle de l'aspect | Résistance à la méthyléthyl cétone |
|---|---|---|---|---|---|---|---|---|
| 1 | A | 130 | H | 160 | 160 | 10,5 | bon | > 100 |
| 2 | B | 100 | 2H | 160 | 160 | 10,4 | bon | > 120 |
| 2 | E | 100 | H | 160 | 160 | 10,0 | bon | > 100 |
| 3 | A | 130 | 2H | 140 | 140 | 10,0 | moyen | > 150 |
| 4 | C | 100 | 2H | 160 | 140 | 10,2 | bon | > 150 |
| 5 | A | 100 | 3H | 120 | 100 | 9,6 | bon | > 150 |
| 6 | D | 130 | 2H | 140 | 140 | 9,8 | bon | > 140 |
| 7 | A | 100 | 2H | 140 | 140 | 10,0 | bon | > 100 |
| 8 | B | 130 | 3H | 140 | 120 | 9,5 | bon | > 180 |
| 9 | D | 130 | 2H | 120 | 100 | 10,1 | moyen | > 120 |
| 10 | C | 100 | 2H | 160 | 160 | 10,5 | bon | > 130 |
| 11 | A | 100 | H | 160 | 160 | 10,8 | bon | > 120 |
| 12 | A | 140 | 2H | 160 | 160 | 9,8 | bon | > 100 |
| 12 | B | 140 | 3H | 160 | 140 | 9,5 | bon | > 130 |
| 12 | C | 140 | 3H | 140 | 140 | 9,5 | bon | > 130 |
| C1 (1) | F | 140 | HB | 140 | 120 | 9,4 | mauvais | > 80 |
| C1 (1) | G | 140 | HB | 140 | 120 | 9,4 | mauvais | > 80 |
| C2 (1) | H | 140 | B | 140 | 140 | 9,6 | moyen | > 100 |
| C3 (1) | A | 130 | H | 140 | 120 | 10 | mauvais | > 100 |

(1) à titre comparatif

EP 0 739 922 B1

Ces résultats montrent clairement que les compositions en poudre conformes à l'invention à base de polyesters cristallins contenant des groupes méthacrylyle terminaux donnent des enduits de peinture et de vernis qui possèdent des caractéristiques avantageuses nettement supérieures à celles des enduits correspondants obtenus à partir des compositions de l'état de la technique. On voit en effet, que pour les compositions de l'état de la technique à base des polyesters cristallins contenant des groupes carboxyle (C1 et C2) et d'un composé polyépoxydé comme agent de réticulation (formulations F, G et H, durcies à une température comparable), il n'est pas possible d'obtenir des revêtements présentant une dureté au crayon et un aspect de surface acceptable. Par contre, les compositions conformes à l'invention obtenues à partir des polyesters cristallins contenant des groupes méthacrylyle terminaux fournissent des enduits présentant une dureté remarquable atteignant un degré de dureté de 2H à 3H et, en outre, un excellent aspect de surface. A l'examen des résultats de ce tableau, on constate également que, les excellentes propriétés des compositions conformes à l'invention peuvent être obtenues à plus basse température (100 à 130°C).

Par ailleurs, en comparant les caractéristiques des enduits préparés à partir des polyesters cristallins 1 et C3, on voit bien qu'une composition en poudre constituée d'un polyester cristallin contenant des groupes acrylyle terminaux (C3) ne fournit pas d'aussi bons revêtements qu'une composition en poudre conforme à l'invention constituée d'un polyester cristallin contenant des groupes méthacrylyle terminaux, particulièrement en ce qui concerne la résistance aux chocs et l'aspect de surface. La viscosité très élevée du polyester cristallin C3 (viscosité ICI à 175 °C: 16.000mPa.s) traduit bien l'instabilité thermique des polyesters cristallins contenant des groupes acrylyle terminaux, qui commencent à gélifier lors de leur synthèse.

Ces résultats montrent clairement la supériorité des compositions en poudre conformes à l'invention par rapport aux compositions de l'état de la technique.


**Revendications**

1.  Compositions en poudre durcissables par rayonnement caractérisées en ce qu'elles comprennent au moins un polyester cristallin contenant des groupes méthacrylyle terminaux comprenant les produits de réaction du méthacrylate de glycidyle et d'un polyester cristallin contenant des groupes carboxyle terminaux, ledit polyester cristallin contenant des groupes carboxyle terminaux étant choisi parmi

     (a) un polyester qui est le produit de réaction de

          (1) un constituant acide qui contient (a.1.1) 85 à 100 moles % d'acide téréphtalique ou d'acide 1,4-cyclohexanedicarboxylique et (a.1.2) 0 à 15 moles % d'au moins un autre acide di- ou polycarboxylique aliphatique, cycloaliphatique ou aromatique ayant de 4 à 14 atomes de carbone, et
          (2) un constituant alcoolique qui contient (a.2.1) 85 à 100 moles % d'un diol aliphatique saturé à chaîne droite ayant de 2 à 12 atomes de carbone et (a.2.2) 0 à 15 moles % d'au moins un autre di- ou polyol aliphatique ou cycloaliphatique ayant de 2 à 15 atomes de carbone; et

     (b) un polyester qui est le produit de réaction de

          (1) un constituant acide qui contient (b.1.1) 85 à 100 moles % d'un acide dicarboxylique aliphatique saturé à chaîne droite ayant de 4 à 14 atomes de carbone et (b.1.2) 0 à 15 moles % d'au moins un autre acide di- ou polycarboxylique aliphatique, cycloaliphatique ou aromatique ayant de 4 à 14 atomes de carbone, et,
          (2) un constituant alcoolique qui contient (b.2.1) 85 à 100 moles % de 1,4-cyclohexanediol, de 1,4-cyclohexanediméthanol ou d'éthylène glycol et (b.2.2) 0 à 15 moles % d'au moins un autre di- ou polyol aliphatique ou cycloaliphatique ayant de 2 à 15 atomes de carbone

     et ledit polyester cristallin contenant des groupes méthacrylyle terminaux présentant un degré d'insaturation terminale de 0,18 à 1,8 milliéquivalents de doubles liaisons par gramme de polyester, ainsi qu'une température de fusion supérieure à 40°C.

2.  Compositions en poudre selon la revendication 1, caractérisées en ce que l'acide di- ou polycarboxylique (a.1.2) est choisi parmi l'acide maléique, l'acide fumarique, l'acide isophtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque, l'acide sébacique, l'acide trimellitique, l'acide pyromellitique et leurs anhydrides, seuls ou en mélange.

3.  Compositions en poudre selon l'une quelconque des revendications 1 et 2, caractérisées en ce que le diol aliphatique saturé à chaîne droite (a.2.1) est choisi parmi l'éthylène glycol, le 1,4-butanediol, le 1,5-pentanediol et le 1,6-hexanediol.

4. Compositions en poudre selon l'une quelconque des revendications 1 à 3, caractérisées en ce que le di- ou polyol aliphatique ou cycloaliphatique (a.2.2) est choisi parmi le 1,4-cyclohexanediol, le 1,4-cyclohexanediméthanol, le bisphénol A hydrogéné, le triméthylolpropane, le ditriméthylolpropane, le triméthyloléthane, le pentaérythritol et leurs mélanges.

5. Compositions en poudre selon la revendication 1, caractérisées en ce que l'acide dicarboxylique aliphatique saturé à chaîne droite (b.1.1) est choisi parmi l'acide succinique, l'acide glutarique, l'acide adipique, l'acide pimélique, l'acide subérique, l'acide azélaïque, l'acide sébacique, l'acide 1,12-dodécanedioïque et leurs anhydrides, seuls ou en mélange.

6. Compositions en poudre selon la revendication 5, caractérisées en ce que l'acide dicarboxylique aliphatique saturé à chaîne droite (b.1.1) est l'acide adipique.

7. Compositions en poudre selon l'une quelconque des revendications 1, 5 et 6, caractérisées en ce que l'acide di- ou polycarboxylique (b.1.2) est choisi parmi l'acide maléique, l'acide fumarique, l'acide téréphtalique, l'acide isophtalique, l'acide 1,2-cyclohexanedicarboxylique, l'acide 1,3-cyclohexanedicarboxylique, l'acide 1,4-cyclohexanedicarboxylique, l'acide trimellitique, l'acide pyromellitique et leurs anhydrides, seuls ou en mélange.

8. Compositions en poudre selon l'une quelconque des revendications 1 et 5 à 7, caractérisées en ce que le di- ou polyol aliphatique ou cycloaliphatique (b.2.2) est choisi parmi l'éthylène glycol, le propylène glycol, le 1,4-butanediol, le 1,5-pentanediol, le 1,6-hexanediol, le 1,4-cyclohexanediol, le 1,4-cyclohexanediméthanol, le bisphénol A hydrogéné, le triméthylolpropane, le ditriméthylolpropane, le triméthyloléthane, le pentaérythritol et leurs mélanges.

9. Compositions en poudre selon l'une quelconque des revendications 1 à 8, caractérisées en ce que ledit au moins un polyester cristallin contenant des groupes méthacrylyle terminaux présente un degré d'insaturation terminale de 0,35 à 1,25 milliéquivalents de doubles liaisons par gramme de polyester.

10. Compositions en poudre selon l'une quelconque des revendications 1 à 9, caractérisées en ce que ledit au moins un polyester cristallin contenant des groupes méthacrylyle terminaux possède un poids moléculaire moyen en nombre compris entre 1.000 et 21.000, de préférence entre 1.300 et 9.000.

11. Compositions en poudre selon l'une quelconque des revendications 1 à 10, caractérisées en ce que ledit au moins un polyester cristallin contenant des groupes méthacrylyle terminaux présente une viscosité à l'état fondu inférieure à 10.000 mPa.s mesurée à 175°C au viscosimètre cône/plateau.

12. Compositions en poudre selon l'une quelconque des revendications 1 à 11, caractérisées en ce que ledit au moins un polyester cristallin contenant des groupes méthacrylyle terminaux présente une température de fusion d'environ 60 à 150°C.

13. Compositions en poudre selon l'une quelconque des revendications 1 à 12, caractérisées en ce qu'elles comprennent, en plus, un oligomère éthyléniquement insaturé.

14. Compositions en poudre selon la revendication 13, caractérisées en ce que l'oligomère éthyléniquement insaturé est le triacrylate ou le triméthacrylate de l'isocyanurate de tris(2-hydroxyéthyle), de préférence, le triacrylate de l'isocyanurate de tris(2-hydroxyéthyle).

15. Compositions en poudre selon l'une quelconque des revendications 13 et 14, caractérisées en ce qu'elles comprennent pour 100 parties en poids, jusqu'à 20 parties en poids, de préférence jusqu'à 10 parties en poids de l'oligomère éthyléniquement insaturé.

16. Compositions en poudre durcissables par irradiation ultraviolette selon l'une quelconque des revendications 1 à 15, caractérisées en ce qu'elles comprennent, en plus, un photoinitiateur et éventuellement un photoactivateur.

17. Compositions en poudre selon la revendication 16, caractérisées en ce qu'elles comprennent pour 100 parties en poids, jusqu'à 15 parties en poids, de préférence de 0,5 à 8 parties en poids de photoinitiateur.

18. Procédé de revêtement d'un article, caractérisé en ce qu'on applique sur ledit article une composition en poudre durcissable par rayonnement selon l'une quelconque des revendications 1 à 17, par dépôt par pulvérisation au pistolet électrostatique ou tribo-électrique ou par dépôt en lit fluidisé, en ce qu'on fait fondre le revêtement ainsi obtenu par chauffage à une température de 80 à 150°C, pendant une durée d'environ 0,5 à 10 minutes et en ce que l'on expose ensuite ledit revêtement à l'état fondu à des rayons ultraviolets ou à des faisceaux d'électrons accélérés pendant une durée suffisante pour former un revêtement durci.

19. Vernis et peintures en poudre durcissables par irradiation avec un faisceau d'électrons accélérés, obtenus à partir de compositions selon l'une quelconque des revendications 1 à 15.

20. Vernis et peintures en poudre durcissables par irradiation ultraviolette, obtenus à partir de compositions selon l'une quelconque des revendications 16 et 17.

21. Articles revêtus entièrement ou partiellement de vernis et/ou de peintures selon l'une quelconque des revendications 19 et 20

## Patentansprüche

1. Strahlungshärtbare pulverförmige Zusammensetzungen, dadurch gekennzeichnet, dass sie wenigstens einen kristallinen Polyester mit Methacrylylendgruppen enthalten, der die Reaktionsprodukte des Glycidylmethacrylats und eines kristallinen Polyesters mit Carboxylendgruppen umfasst, wobei besagter kristalliner Polyester Carboxylendgruppen enthält, die ausgewählt sind unter

   (a) einem Polyester, der das Produkt der Reaktion ist von

   (1) einem sauren Bestandteil, der (a.1.1) 85 bis 100 Mol-% Terephthalsäure oder 1,4-Cyclohexandicarbonsäure und (a.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und
   (2) einem alkoholischen Bestandteil, der (a.2.1) 85 bis 100 Mol-% eines gesättigten aliphatischen Diols mit gerader Kette mit 2 bis 12 Kohlenstoffatomen und (a.2.2) 0 bis 15 Mol-% wenigstens eines weiteren aliphatischen oder cycloaliphatischen Di- oder Polyols mit 2 bis 15 Kohlenstoffatomen enthält; und

   (b) einem Polyester, der das Produkt der Reaktion ist von

   (1) einem sauren Bestandteil, der (b.1.1) 85 bis 100 Mol-% einer gesättigten aliphatischen Dicarbonsäure mit gerader Kette mit 4 bis 14 Kohlenstoffatomen und (b.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und
   (2) einem alkoholischen Bestandteil, der (b.2.1) 85 bis 100 Mol-% 1,4-Cyclohexandiol, 1,4-Cyclohexandimethanol oder Ethylenglykol und (b.2.2) 0 bis 15 Mol-% wenigstens eines weiteren aliphatischen oder cycloaliphatischen Di- oder Polyols mit 2 bis 15 Kohlenstoffatomen enthält,

   und wobei besagter kristalliner Polyester mit Methacrylylendgruppen in einem Grad von 0,18 bis 1,8 Milliäquivalenten Doppelbindungen pro Gramm Polyester endständig ungesättigt ist, sowie eine Schmelztemperatur höher als 40 °C aufweist.

2. Pulverförmige Zusammensetzungen gemäß Anspruch 1, dadurch gekennzeichnet, dass die Di- oder Polycarbonsäure (a.1.2) unter Maleinsäure, Fumarsäure, Isophthalsäure, Terephthalsäure, 1,2-Cyclohexandicarbonsäure, 1,3-Cyclohexandicarbonsäure, 1,4-Cyclohexandicarbonsäure, Bernsteinsäure, Glutarsäure, Adipinsäure, Pimelinsäure, Suberinsäure, Azelainsäure, Sebacinsäure, Trimellitsäure, Pyromellitsäure und ihren Anhydriden, allein oder im Gemisch, ausgewählt ist.

3. Pulverförmige Zusammensetzungen gemäß einem der Ansprüche 1 und 2,
   dadurch gekennzeichnet, dass das gesättigte aliphatische Diol mit gerader Kette (a.2.1) unter Ethylenglykol, 1,4-Butandiol, 1,5-Pentandiol und 1,6-Hexandiol ausgewählt ist.

**4.** Pulverförmige Zusammensetzungen gemäß einem der Ansprüche 1 bis 3, dadurch gekennzeichnet, dass das aliphatische oder cycloaliphatische Di- oder Polyol (a.2.2) unter 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

**5.** Pulverförmige Zusammensetzungen gemäß Anspruch 1, dadurch gekennzeichnet, dass die gesättigte aliphatische Dicarbonsäure mit gerader Kette (b.1.1) unter Bernsteinsäure, Glutarsäure, Adipinsäure, Pimelinsäure, Suberinsäure, Azelainsäure, Sebacinsäure, 1,12-Dodecandisäure und ihren Anhydriden, allein oder im Gemisch, ausgewählt ist.

**6.** Pulverförmige Zusammensetzungen gemäß Anspruch 5, dadurch gekennzeichnet, dass die gesättigte aliphatische Dicarbonsäure mit gerader Kette (b.1.1) Adipinsäure ist.

**7.** Pulverförmige Zusammensetzungen gemäß einem der Ansprüche 1, 5 und 6, dadurch gekennzeichnet, dass die Di- oder Polycarbonsäure (b.1.2) unter Maleinsäure, Fumarsäure, Terephthalsäure, Isophthalsäure, 1,2-Cyclohexandicarbonsäure, 1,3-Cyclohexandicarbonsäure, 1,4-Cyclohexandicarbonsäure, Trimellitsäure, Pyromellitsäure und ihren Anhydriden, allein oder im Gemisch, ausgewählt ist.

**8.** Pulverförmige Zusammensetzungen gemäß einem der Ansprüche 1 und 5 bis 7, dadurch gekennzeichnet, dass das aliphatische oder cycloaliphatische Di- oder Polyol (b.2.2) unter Ethylenglykol, Propylenglykol, 1,4-Butandiol, 1,5-Pentandiol, 1,6-Hexandiol, 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

**9.** Pulverförmige Zusammensetzungen gemäß einem der Ansprüche 1 bis 8, dadurch gekennzeichnet, dass besagter wenigstens ein kristalliner Polyester mit Methacrylylendgruppen in einem Grad von 0,35 bis 1,25 Milliäquivalenten Doppelbindungen pro Gramm Polyester endständig ungesättigt ist.

**10.** Pulverförmige Zusammensetzungen gemäß einem der Ansprüche 1 bis 9, dadurch gekennzeichnet, dass besagter wenigstens ein kristalliner Polyester mit Methacrylylendgruppen ein mittleres Molekulargewicht, ausgedrückt als Zahl, zwischen 1.000 und 21.000, vorzugsweise zwischen 1.300 und 9.000 besitzt.

**11.** Pulverförmige Zusammensetzungen gemäß einem der Ansprüche 1 bis 10, dadurch gekennzeichnet, dass besagter wenigstens ein kristalliner Polyester mit Methacrylylendgruppen eine Viskosität in der Schmelze kleiner als 10.000 mPa·s, gemessen bei 175 °C mit dem Kegel-Platte-Viskosimeter, aufweist.

**12.** Pulverförmige Zusammensetzungen gemäß einem der Ansprüche 1 bis 11, dadurch gekennzeichnet, dass besagter wenigstens ein kristalliner Polyester mit Methacrylylendgruppen eine Schmelztemperatur von etwa 60 bis 150 °C aufweist.

**13.** Pulverförmige Zusammensetzungen gemäß einem der Ansprüche 1 bis 12, dadurch gekennzeichnet, dass sie außerdem ein ethylenisch ungesättigtes Oligomer umfassen.

**14.** Pulverförmige Zusammensetzungen gemäß Anspruch 13, dadurch gekennzeichnet, dass das ethylenisch ungesättigte Oligomer das Triacrylat oder Trimethacrylat des Tris-(2-hydroxyethyl)-isocyanurats, vorzugsweise das Triacrylat des Tris-(2-hydroxyethyl)-isocyanurats ist.

**15.** Pulverförmige Zusammensetzungen gemäß einem der Ansprüche 13 und 14, dadurch gekennzeichnet, dass sie auf 100 Gewichtsteile bis zu 20 Gewichtsteile, vorzugsweise bis zu 10 Gewichtsteile, des ethylenisch ungesättigten Oligomers umfassen.

**16.** Durch ultraviolette Strahlung härtbare pulverförmige Zusammensetzungen gemäß einem der Ansprüche 1 bis 15, dadurch gekennzeichnet, dass sie außerdem einen Photoinitiator und gegebenenfalls einen Photoaktivator umfassen.

**17.** Pulverförmige Zusammensetzungen gemäß Anspruch 16, dadurch gekennzeichnet, dass sie auf 100 Gewichtsteile bis zu 15 Gewichtsteile, vorzugsweise 0,5 bis 8 Gewichtsteile, Photoinitiator enthalten.

**18.** Verfahren zur Beschichtung eines Gegenstandes, dadurch gekennzeichnet, dass man auf besagten Gegenstand durch Aufbringen durch Sprühen mit der elektrostatischen oder triboelektrischen Pistole oder durch Aufbringen im Fließbett eine strahlungshärtbare pulverförmige Zusammensetzung gemäß einem der Ansprüche 1 bis 17 aufträgt, dadurch, dass man die so erhaltene Beschichtung durch Erhitzen auf eine Temperatur von 80 bis 150 °C über eine Dauer von etwa 0,5 bis 10 Minuten zum Schmelzen bringt und dadurch, dass man dann besagte Beschichtung in geschmolzenem Zustand ultravioletten Strahlen oder Bündeln beschleunigter Elektronen über eine Dauer, die ausreichend ist, um eine gehärtete Beschichtung zu bilden, aussetzt.

**19.** Durch Bestrahlung mit einem Bündel beschleunigter Elektronen härtbare pulverförmige Lacke und Farben, die aus Zusammensetzungen gemäß einem der Ansprüche 1 bis 15 erhalten wurden.

**20.** Durch ultraviolette Strahlung härtbare pulverförmige Lacke und Farben, die aus Zusammensetzungen gemäß einem der Ansprüche 16 und 17 erhalten wurden.

**21.** Vollständig oder teilweise mit Lacken und/oder Farben gemäß einem der Ansprüche 19 und 20 beschichtete Gegenstände.

**Claims**

**1.** Powder compositions which can be hardened by radiation, characterized in that they include at least one crystalline polyester containing terminal methacrylyl groups comprising the reaction products of glycidyl methacrylate and of a crystalline polyester containing terminal carboxyl groups, the said crystalline polyester containing terminal carboxyl groups being chosen from among

(a) a polyester which is the reaction product of

(1) an acid constituent which contains (a.1.1) 85 to 100 mole % of terephthalic acid or of 1,4-cyclohexanedicarboxylic acid and (a.1.2) 0 to 15 mole % of at least one other aliphatic, cycloaliphatic or aromatic di- or polycarboxylic acid having 4 to 14 carbon atoms, and

(2) an alcohol constituent which contains (a.2.1) 85 to 100 mole % of a straight chain saturated aliphatic diol having 2 to 12 carbon atoms and (a.2.2) 0 to 15 mole % of at least one other aliphatic or cycloaliphatic di- or polyol having 2 to 15 carbon atoms; and

(b) a polyester which is the reaction product of

(1) an acid constituent which contains (b.1.1) 85 to 100 moles % of a straight chain saturated aliphatic dicarboxylic acid having 4 to 14 carbon atoms and (b.1.2) 0 to 15 mole % of at least one other aliphatic, cycloaliphatic or aromatic di-or polycarboxylic acid having 4 to 14 carbon atoms, and
(2) an alcohol constituent which contains (b.2.1) 85 to 100 mole % of 1,4-cyclohexanediol, 1,4-cyclohexanedimethanol or ethylene glycol and (b.2.2) 0 to 15 mole % -of at least one other aliphatic or cycloaliphatic di- or polyol having 2 to 15 carbon atoms

and the said crystalline polyester containing terminal methacrylyl groups having a terminal degree of unsaturation of 0.18 to 1.8 milliequivalents of double bonds per gramme of polyester, as well as a melting point above 40°C.

**2.** Powder compositions according to claim 1, characterized in that the di- or poly-carboxylic acid (a.1.2) is chosen from maleic acid, fumaric acid, isophthalic acid, terephthalic acid, 1,2-cyclohexanedicarboxylic acid, 1,3-cyclohexanedicarboxylic acid, 1,4-cyclohexanedicarboxylic acid, succinic acid, glutaric acid, adipic acid, pimelic acid, suberic acid, azelaic acid, sebacic acid, trimellitic acid, pyromellitic acid and their anhydrides, alone or mixed.

**3.** Powder compositions according to either of claims 1 or 2, characterized in that the straight chain saturated aliphatic diol (a.2.1) is chosen from ethylene glycol, 1,4-butanediol, 1,5-pentanediol and 1,6 hexanediol.

**4.** Powder compositions according to any one of claims 1 to 3, characterized in that the aliphatic or cycloaliphatic di- or polyol (a.2.2) is chosen from among 1,4-cyclohexanediol, 1,4-cyclohexanedimethanol, hydrogenated bisphenol A, trimethylolpropane, ditrimethylolpropane, trimethylolethane, pentaerythritol and mixtures thereof.

**5.** Powder compositions according to claim 1, characterized in that the straight chain saturated aliphatic dicarboxylic acid (b.1.1) is chosen from among succinic acid, glutaric acid, adipic acid, pimelic acid, suberic acid, azelaic acid, sebacic acid, 1,12-dodecanedioic acid and their anhydrides, alone or mixed.

**6.** Powder compositions according to claim 5, characterized in that the straight chain saturated aliphatic dicarboxylic acid (b.1.1) is adipic acid.

**7.** Powder compositions according to any one of claims 1, 5 and 6, characterized in that the di- or polycarboxylic acid (b.1.2) is chosen from among maleic acid, fumaric acid, terephthalic acid, isophthalic acid, 1,2-cyclohexanedicarboxylic acid, 1,3-cyclohexanedicarboxylic acid, 1,4-cyclohexanedicarboxylic acid, trimellitic acid pyromellitic acid and their anhydrides, alone or mixed.

**8.** Powder compositions according to any one of claims 1 and 5 to 7, characterized in that the aliphatic or cycloaliphatic di- or polyol (b.2.2) is chosen from among ethylene glycol, propylene glycol, 1,4-butanediol, 1,5-pentanediol, 1,6 hexanediol, 1,4-cyclohexanediol, 1,4-cyclohexanedimethanol, hydrogenated bisphenol A, trimethylol propane, ditrimethylolpropane, trimethylolethane, pentaerythritol and mixtures thereof.

**9.** Powder compositions according to any one of claims 1 to 8, characterized in that the said at least one crystalline polyester containing terminal methacrylyl groups has a degree of terminal unsaturation of 0.35 to 1.25 milliequivalents of double bonds per gramme of polyester.

**10.** Powder compositions according to any one of claims 1 to 9, characterized in that the said at least one crystalline polyester containing terminal methacrylyl groups possesses a mean number molecular weight between 1,000 and 21,000, preferably between 1,300 and 9,000.

**11.** Powder compositions according to any one of claims 1 to 10, characterized in that the said at least one crystalline polyester containing terminal methacrylyl groups has a viscosity in the molten state of less than 10,000 mPa.s at 175°C using a cone and plate viscometer.

**12.** Powder compositions according to any one of claims 1 to 11, characterized in that the said at least one crystalline polyester containing terminal methacrylyl groups has a melting point of approximately 60 to 150°C.

**13.** Powder compositions according to any one of claims 1 to 12, characterized in that it additionally includes an ethylenically unsaturated oligomer.

**14.** Powder compositions according to claim 13, characterized in that the ethylenically unsaturated oligomer is the triacrylate or trimethacrylate of tris(2-hydroxyethyl) isocyanurate, preferably the triacrylate of tris(2-hydroxyethyl) isocyanurate.

**15.** Powder compositions according to either of claims 13 or 14, characterized in that they include, per 100 parts by weight, up to 20 parts by weight, preferably up to 10 parts by weight, of ethylenically unsaturated oligomer.

**16.** Powder compositions which can be hardened by ultraviolet radiation according to any one of claims 1 to 15, characterized in that they additionally include a photoinitiator and optionally a photoactivator.

**17.** Powder compositions according to claim 16, characterized in that they include per 100 parts by weight, up to 15 parts by weight, preferably 0.5 to 8 parts by weight, of photoinitiator.

**18.** Process for coating an article, characterized in that a powder composition which can be hardened by radiation according to any one of claims 1 to 17, is applied to the said article, by deposition using spraying with an electrostatic or triboelectric gun or by deposition in a fluidized bed, in that the coating thus obtained is melted by heating at a temperature of 80 to 150°C for a period of 0.5 to 10 minutes and in that the said coating in the molten state is then exposed to ultraviolet rays or accelerated electron beams for a sufficient period to form a hardened coating.

**19.** Powder varnishes and paints which can be hardened by irradiation with an accelerated beam of electrons, obtained from compositions according to any one of claims 1 to 15.

**20.** Powder varnishes and paints which can be hardened by ultraviolet radiation, obtained from compositions according to either of claims 16 or 17.

**21.** Articles coated entirely or partially with varnishes and/or paints according to either of claims 19 or 20.